# EUROPÄISCHE PATENTSCHRIFT

(11) **EP 2 492 074 B1**
(45) Veröffentlichungstag und Bekanntmachung des Hinweises auf die Patenterteilung: **19.03.2014**
(21) Anmeldenummer: 12156375.3
(22) Anmeldetag: 21.02.2012
(51) Int. Cl.: B29B 11/16, B29C 70/48, F16F 1/368

(54) **Verfahren zur Herstellung einer Blattfeder als Faserverbundbauteil**
Method for producing a leaf spring as fibre compound component
Procédé de fabrication d'une ressort à lames en tant que composant composite en fibre

(30) Priorität: 28.02.2011 DE 102011012654
(43) Veröffentlichungstag der Anmeldung: 29.08.2012
(73) Patentinhaber: Benteler SGL GmbH & Co. KG, 33102 Paderborn (DE)
(72) Erfinder: Müller, Ulrich, 86462 Langweid am Lech (DE)
(74) Vertreter: Ksoll, Peter

(56) Entgegenhaltungen:
- EP-A2- 1 375 591
- DE-A1- 3 434 522
- DE-A1- 10 161 773
- DE-A1- 10 321 824
- DE-A1- 19 959 415
- US-A1- 2005 086 916
- US-A1- 2007 241 478
- PERRUCHOT M: "LES RESSORTS EN MATERIAUX COMPOSITES", REVUE TECHNIQUE DIESEL, ETAI, BOULOGNE BILLANCOURT, FR, Nr. 171, 1. September 1991 (1991-09-01), Seiten 23-26, XP000236667, ISSN: 0037-2579
- LANGDON R ET AL: "MATERIALS PLASTICS AND COMPOSITES", AUTOMOTIVE ENGINEER, PROFESSIONAL ENGINEERING PUBLISHING, LONDON, GB, Bd. 22, Nr. 2, 1. März 1997 (1997-03-01), XP000682677, ISSN: 0307-6490
- RUDD C D: "Resin transfer molding and structural reaction injection molding" In: Steven L. Donaldson, Daniel B. Miracle: "ASM Handbook Composites Volume 21", 1. Dezember 2001 (2001-12-01), ASM International, 2001, XP002676513, ISBN: 0-87170-703-9 Seiten 492-500, * Seite 492, mittlere Spalte; Abbildung 1 * * Seite 493, mittlere Spalte - rechte Spalte * * Seite 495, mittlere Spalte - rechte Spalte * * Seite 497, mittlere Spalte - rechte Spalte *
- HENNISSEN M B: "AUTOMOTIVE APPLICATIONS OF EPOXY RESIN TRANSFER MOULDING", INGENIEURS DE L'AUTOMOBILE, EDITIONS VB, GARCHES, FR, Nr. 722, 1. Juni 1998 (1998-06-01), Seiten 40,42-45, XP000774743, ISSN: 0020-1200
- PLIVIER GUILLERMIN ED - MIRACLE & S L DONALDSON D B: "COMPUTER-AIDED DESIGN", 1. Dezember 2001 (2001-12-01), COMPOSITES, IPC BUSINESS PRESS LTD. HAYWARDS HEATH, GB, PAGE(S) 366 - 372, XP002628834, ISSN: 0010-4361 * Seite 368 - Seite 371 *
- CAMPBELL F C ED - CAMPBELL FLAKE C: "Manufacturing processes for advanced composites, passage", 1 January 2004 (2004-01-01), MANUFACTURING PROCESSES FOR ADVANCED COMPOSITES, ELSEVIER ADVANCED TECHNOLOGY, OXFORD, GB, PAGE(S) 331 - 341, XP002565382, ISBN: 978-1-85617-415-2

## Beschreibung

Die Erfindung betrifft ein Verfahren zur Herstellung einer Blattfeder als Faserverbundbauteil für ein Kraftfahrzeug gemäß den Merkmalen im Oberbegriff von Patentanspruch 1.

Verbundwerkstoffe weisen gegenüber den sie zusammensetzenden Komponenten allgemein bessere mechanische Eigenschaften auf. Die sich im Verbund der zumeist zwei Hauptkomponenten einstellenden Wechselwirkungen ermöglichen eine idealisierte Aufnahme der inneren Kräfte, welche sich bei Belastung eines aus einem Verbundwerkstoff hergestellten Bauteils einstellen. Insbesondere Faserverbundwerkstoffe weisen in vorteilhafter Weise eine hohe gewichtsbezogene Festigkeit sowie Steifigkeit der daraus hergestellten Bauteile auf.

Als Ausgangsbasis dienen künstliche oder natürliche Fasern, welche einzeln oder als Faserbündel (Roving) sowie als textiles Flächengebilde verarbeitet werden. In Kombination mit einer die einzelnen Fasern umgebenden Matrix aus einem aushärtenden Harz entstehen so hochbelastbare Bauteile, denen sich ein nahezu unbegrenztes Anwendungsgebiet eröffnet. Die im Stand der Technik bekannten Herstellungsmöglichkeiten basieren auf der Verwendung von mit einem Harz imprägnierten Fasern, welche in einem formgebenden Werkzeug unter Einfluss von Druck und Wärme zu einem Faserverbundbauteil kombiniert werden.

Die DE 10 2006 052 137 A1 offenbart ein Verfahren zur Herstellung einer Blattfeder aus einem Faserverbundwerkstoff. Der Faserverbundwerkstoff umfasst einzelne Fasern und eine die Fasern umgebende Matrix aus einem duroplastischen Harz, wobei das Harz in einem Pressformwerkzeug gehärtet wird.

Die einzelnen Fasern werden in Form eines Faserstranges zunächst mit einer nicht abgebundenen Kunststoffmatrix benetzt, welche unter Einfluss von Wärme in den Faserstrang eindringt und somit infiltriert. Durch anschließendes Abkühlen wird das vorzeitige Ausreagieren des Harzes unterbunden, woraufhin der so infiltrierte Faserstrang zu einzelnen Prepregs abgelängt wird. Die einzelnen Prepregs werden in einem formgebenden Pressformwerkzeug aufeinander geschichtet und unter Einfluss von Druck und Wärme gehärtet. Durch eine anschließende Endbearbeitung wird die fertige Blattfeder erstellt.

Die hierbei erforderlichen Maßnahmen zum Infiltrieren und Abkühlung des Faserstrangs gestalten sich aufwendig. Insbesondere die Kühlung muss bis kurz vor Verwendung der Prepregs gesichert sein, um die bindenden Eigenschaften des Harzes zu erhalten. Darüber hinaus zeigt sich die Handhabung der Prepregs mit ihrem nicht abgebundenen Harz insgesamt erschwert. Weiterhin verlangt auch die Maßnahme des Schichtens der klebrigen Prepregs ein hohes Maß an Präzision, um diese möglichst deckungsgleich und mit wenig Lufteinschluss aufeinander zu legen. Insbesondere das Schichten geht daher mit einem erhöhten Zeitaufwand einher. Überdies ist dabei auch den Endbereichen des Bauteils eine hohe Aufmerksamkeit zu widmen, um möglichst keine Kerbwirkung oder offen liegende Enden der Fasern zu erhalten, was zu einer Schwächung und somit verkürzten Lebensdauer des Faserverbundbauteils führen kann.

Aus der US 2005/086916 A1 ist ein Verfahren zur Herstellung einer Blattfeder als Faserverbundbauteil für ein Kraftfahrzeug bekannt. Zur Herstellung der Blattfeder werden die einzelnen Fasern zunächst in Form von wenigstens zwei Textillagen bereitgestellt und aufeinandergeschichtet, woraufhin diese zu einer trockenen Preform fixiert werden. Diese Preform wird anschließend in einer RTM-Kavität mit Harz infiltriert und gehärtet.

Durch die DE 103 21 824 A1 ist ein Verfahren zum Gießen von Strukturverbundwerkstoffen bekannt. Hierbei kann es sich beispielsweise um Blattfedern für Fahrgestellkomponenten handeln. Zur Herstellung wird eine Vorform in eine Gussform eingelegt, die Gussform geschlossen und in der Gussform über einen Entlüftungsschacht ein Vakuum aufgebaut. Anschließend wird ein Harzmaterial in die Gussform durch einen Harzeinlass eingespritzt, bis dieses den Entlüftungsschacht zumindest teilweise ausfüllt. Die Vakuumerzeugung wird dann beendet. Anschließend wird ein positiver Druck über den Entlüftungsschacht aufgebracht und aus dem Entlüftungsschacht zumindest etwas Harz zurück in die Gießform gezwängt. Danach erfolgt das Aushärten des Harzes und die Entnahme der fertiggestellten Komponente.

Die DE 34 34 522 A1 beschreibt ein Verfahren zur Herstellung von Formteilen, vorzugsweise Blattfedern aus faserverstärkten Reaktionsharzen mit einem Fasermasseanteil von 50 bis 80 % durch Einlegen von vorgerichteten Faserverstärkungsmaterialien in eine Form, dichtes Verschließen der Form, Einfüllen des Reaktionsharzes in die Form, Verringern des Volumens des Forminnenraumes durch Verdrängen der Restluft, Aushärten des Harzes und Entformen des ausgehärteten Formteils.

Weiterhin zählt durch die DE 101 61 773 A1 ein Verfahren zur Herstellung eines dreidimensional geformten Faserverbundkunststoffbauteils zum Stand der Technik. Zur Herstellung wird ein dreidimensional gewebtes Faserhalbzeug zunächst in eine Fixierform eingelegt und anschließend durch ein Fixiermittel in seiner dreidimensionalen Form fixiert. Dadurch kann sich das Faserhalbzeug während des weiteren Herstellvorgangs nicht mehr verformen. Das Fixiermittel kann in flüssiger oder pulverförmiger Form vorliegen und wird mit einem geeigneten Werkzeug, wie beispielsweise einer Sprühpistole oder einer Bestreuvorrichtung, auf das Faserhalbzeug aufgebracht.

Vor diesem Hintergrund bietet die Herstellung von Blattfedern als Faserverbundbauteile mit Rücksicht auf industriell wirtschaftliche Prozesse noch Raum für Verbesserungen.

Der vorliegenden Erfindung liegt dabei die Aufgabe zugrunde, ein Verfahren zur Herstellung einer Blattfeder als Faserverbundbauteil für ein Kraftfahrzeug dahingehend zu verbessern, dass die Handhabung der mit Harz zu infiltrierenden Fasern vereinfacht und die Produktion insgesamt wirtschaftlicher erfolgen kann. Weiterhin soll eine mit diesem Verfahren hergestellte Blattfeder aufgezeigt werden, welche trotzt wirtschaftlicherer Herstellung insgesamt und insbesondere in ihren Rand- und Endbereichen präziser gefertigt ist.

Die Lösung des verfahrensmäßigen Teils der Aufgabe besteht nach der Erfindung in einem Verfahren zur Herstellung einer Blattfeder als Faserverbundbauteil für ein Kraftfahrzeug gemäß den Maßnahmen von Patentanspruch 1.

Hiernach wird ein Verfahren zur Herstellung einer Blattfeder als Faserverbundbauteil für ein Kraftfahrzeug aufgezeigt, welche einzelne Fasern und eine die Fasern umgebende Matrix aus einem thermoplastischen oder duroplastischen Harz umfasst. Das die Fasern infiltrierende Harz wird gehärtet. Erfindungsgemäß werden die Fasern in Form von wenigstens zwei Textillagen bereitgestellt und aufeinander geschichtet. Die so geschichteten Textillagen werden innerhalb eines Pressformwerkzeugs geformt und dabei durch ein auf wenigstens eine der Textillagen trocken aufgebrachtes Bindemittel zu einer trockenen Preform fixiert. Das Bindemittel wird zunächst auf eine Textilbahn aufgebracht, aus welcher die einzelnen Textillagen zugeschnitten werden. Die trockene Preform wird anschließend in einer RTM-Kavität mit dem Harz infiltriert und gehärtet.

Das Härten des Harzes innerhalb der RTM-Kavität erfolgt wenigstens so weit, bis ein belastbarer Härtegrad des aus der RTM-Kavität zu entnehmenden Faserverbundbauteils erreicht wird. Die dabei erreichte Härte des Harzes ist zumindest ausreichend, um beim weiteren Umgang mit dem Faserverbundbauteil keine plastischen Formänderungen zu ermöglichen.

Der besondere Vorteil liegt in der über den gesamten Prozess hinweg erfolgenden trockenen Handhabung der Fasern. Das eigentliche Infiltrieren des Gewebes aus Fasern erfolgt dabei erst innerhalb der RTM-Kavität, aus welcher das zunächst flüssige Harz trocken als Faserverbundbauteil entnommen wird. Durch die hierbei entfallende Maßnahme des Imprägnierens und kühlen Lagerns der imprägnierten Textillagen werden diese nur trocken außerhalb der Werkzeuge als Preform bewegt, wodurch deren Handhabung deutlich erleichtert ist.

Ein wichtiger Aspekt der Erfindung ist dabei das trocken aufgebrachte Bindemittel, durch welches die einzelnen Textillagen in ihrer bereits an die endgültige Form der Blattfeder angelehnten Gestalt zur Preform fixiert werden. Die so hergestellten trockenen Preformen können ohne gesonderte Anforderungen an die Umgebungstemperatur oder Vorhaltezeit gelagert und bewegt werden.

Je nach Anforderung kann das Bindemittel nur bereichsweise auf der Textillage aufgebracht werden. In vorteilhafter Weise ist das Bindemittel auf einer im gestapelten Zustand als Oberseite zu bezeichnenden Fläche der Textillage aufgebracht. Hierbei kann das Bindemittel beispielsweise in Pulverform oder als Granulat vorliegen, welches auf der Oberseite der Textillage aufliegt. Der auf einer Seite der Textillagen erfolgende Auftrag des Bindemittels kann beispielsweise bei der zu oberst aufliegenden Textillage entfallen, da diese bereits auf der darunter liegenden Textillage und somit auf deren mit dem Bindemittel versehenen Oberseite aufliegt.

Das Bindemittel ist dafür vorgesehen, zumindest einzelne Fasern der Textillagen bereichsweise durch Adhäsiv- oder Kohäsivkräfte an sich zu binden. Durch das Bindemittel sind die aufeinander liegenden Textillagen zumindest bereichsweise miteinander verklebt. Das Aufbringen des Bindemittels auf die einzelnen Textillagen kann mittels Kontakt oder berührungslos erfolgen.

Der Auftrag des Bindemittels kann beispielsweise durch Streuen, Sprühen oder Aufrollen erfolgen.

Vorteilhafte Ausgestaltungen des grundsätzlichen Erfindungsgedankens sind Inhalt der abhängigen Patentansprüche 2 bis 11.

Das Bindemittel kann auf einzelne Textillagen aufgebracht werden. Das Bindemittel kann grundsätzlich flächendeckend oder nur bereichsweise auf der Textilbahn aufgebracht werden. Die Art des Auftrags richtet sich dabei nach der zu erstellenden Form, wobei ebene Bereiche auch mit nur lokalem Auftrag formstabil bleiben, während topographisch anspruchsvolle Verläufe eines vollflächigen Auftrags bedürfen.

Dabei können einzelne Bereiche auch mit unterschiedlichen Mengen an Bindemittel versehen werden. Weiterhin kann der Auftrag aus einem einzigen Bindemittel oder aus unterschiedlichen Bindemitteln bestehen, wobei die unterschiedlichen Bindemittel gezielt auf einzelne Bereiche der Textilbahn aufgetragen werden. Somit können beispielsweise unterschiedliche Festigkeiten an die lokalen Anforderungen angepasst werden.

Die einzelnen Textilbahnen können eine gleichmäßige Kontur aufweisen. Weiterhin können die einzelnen Textilbahnen auch eine voneinander abweichende Kontur aufweisen, wodurch allein durch Aufeinanderschichten der unterschiedlichen Textilbahnen lokale Erhebungen oder Vertiefungen des gesamten Textilstapels eingestellt werden können.

Insbesondere können unterschiedlich dicke Bereiche des fertigen Faserverbundbauteils erzeugt werden, indem beispielsweise in einem Mittelbereich einer Textilbahn eine dergegenüber schmalere Textilbahn aufgelegt wird, wodurch im Ergebnis der mittlere Bereich des Faserverbundbauteils verdickt ist. Auch können bereits in ihrer jeweiligen Dicke unterschiedliche Textilbahnen verwendet werden. Die dickeren Textilbahnen können dabei entweder mehrfach miteinander gekreuzte Fasern oder aber insgesamt Fasern mit größerem Durchmesser aufweisen.

Die einzelnen Textillagen können grundsätzlich die Struktur eines Gewebes oder Geleges aufweisen. Zur Herstellung eines Faserverbundbauteils können auch Textillagen aus einem Gewebe oder einem Gelege miteinander kombiniert werden. Als Gelege bestehen die Textillagen bevorzugt aus mehreren Lagen parallel angeordneter Faserrovings, wobei die einzelnen Lagen sich in ihrer jeweiligen Faserrichtung voneinander unterscheiden. Die einzelnen Lagen können untereinander verbunden sein.

Bei den Textillagen in Form eines Gewebes handelt es sich um textile Flächengebilde, welche wenigstens zwei zumeist rechtwinklig oder einem davon abweichenden Verlauf zueinander aufweisende verkreuzte Fasersysteme beinhalten.

Die verwendete Textilbahn kann in sich bereits einlagig oder mehrlagig ausgestaltet sein, so dass die von dieser Textilbahn abgetrennten Textillagen direkt mehrlagig verwendet oder unter Trennung ihrer einzelnen Lagen mit dem Bindemittel versehen und gestapelt werden.

Die Erfindung sieht vor, dass das zwischen einzelnen Textillagen zumindest bereichsweise angeordnete Bindemittel innerhalb des Pressformwerkzeugs durch Erhitzen aufgeschmolzen wird. Der besondere Vorteil liegt hierbei zunächst in der trockenen Aufbringung des Bindemittels. Durch die trockene und in diesem Zusammenhang nicht klebende Konsistenz des Bindemittels ist dieses in seiner Handhabung vereinfacht. Etwaige Überschüsse können problemlos von angrenzenden Bauteilen oder Flächen der verwendeten Werkzeuge sowie Räumlichkeiten entfernt werden. Die eigentlich haftenden Eigenschaften werden erst durch die Reaktivierung des Bindemittels freigesetzt, welches durch den Einsatz von Wärme erfolgt.

Bevorzugt weist das Pressformwerkzeug hierfür wenigstens eine Temperiereinheit auf, durch welche das Bindemittel erhitzt und somit aufgeschmolzen wird. Das Aufschmelzen des Bindemittels kann hierbei auch gezielt lokal erfolgen, wobei die Temperiereinheit das Bindemittel nur bereichsweise erhitzt. Denkbar ist auch ein sukzessives Erhitzen des Bindemittels, wobei einzelne Bereich nacheinander erwärmt werden. Das sukzessive Erwärmen erfolgt vorzugsweise während des Formens der Textillagen, wodurch einzelne Bereich, insbesondere bei komplizierten sphärischen Formgebungen, problemlos ohne Behinderung durch das aufgeschmolzenen Bindemittel aneinander vorbeigleiten und ausgerichtet werden können. Derartige Bereiche werden bevorzugt erst nach deren Formgebung gezielt über die Temperiereinheit erwärmt, wodurch auch hier das Bindemittel aufgeschmolzen und die Textillagen miteinander fixiert werden.

Je nach Art des verwendeten Bindemittels kann die eigentliche Fixierung der Preform auch durch Kühlen des aufgeschmolzenen Bindemittels erfolgen. Hierfür wird das Bindemittel nach seinem Aufschmelzen entweder vollflächig oder gezielt lokal gekühlt, wodurch das Bindemittel zumindest bereichsweise fixiert wird und die Textillagen miteinander verbindet. Analog des Erhitzungsprozesses kann auch das Kühlen sukzessive und in Abhängigkeit der jeweiligen Formgestalt der Preform erfolgen.

Erfindungsgemäß wird aus der so geschaffenen Preform ein Faserverbundrohling heraus getrennt, insbesondere ausgestanzt. Grundsätzlich kann das Heraustrennen des Faserverbundrohlings aus der Preform auch über andere zerteilende Maßnahmen erfolgen. Denkbar hierfür wäre beispielsweise ein mehrhubiges Ausschneiden entlang der Kontur des Faserverbundrohlings. Auch wenn das Stanzen ein überaus wirtschaftliches und mit hoher Präzision einhergehendes Heraustrennen des Faserverbundrohlings aus der Preform ermöglicht, kann dieses somit auch über andere mechanische Werkzeuge oder beispielsweise auch thermische Trennverfahren (z. B. elektrischer Lichtbogen, Laser) erfolgen.

Der aus der Preform herausgetrennte Faserverbundrohling weist eine überaus präzise Konturierung auf, welche unabhängig von der zuvor beim Stapeln sowie Formen der Textillagen erreichten Deckungsgleichheit der Faserenden erreicht wird. In Kombination mit der bereits in der Preform enthaltenen Formgebung weist der Faserverbundrohling eine gleich bleibend hohe Qualität in Bezug auf die Ausrichtung und Konturierung seiner Textillagen, näherhin der einzelnen Fasern, auf.

Der aus der Preform herausgetrennte Faserverbundrohling wird innerhalb der RTM-Kavität mit dem Harz infiltriert und gehärtet. Durch die präzise Konturierung des Faserverbundrohlings kann dieser überaus exakt innerhalb der RTM-Kavität positioniert werden, so dass individuelle und gleich bleibende Randabstände der Fasern sowie Faserenden zu der endgültigen Form der Blattfeder eingehalten werden können.

Bei der RTM-Kavität handelt es sich bevorzugt um ein geschlossenes, insbesondere massives Werkzeug, wodurch der Faserverbundrohling im Zuge eines Resin Transfer Molding (RTM)-Verfahrens mit dem Harz infiltriert und gehärtet wird. Hierbei wird das Harz in die geschlossene RTM-Kavität, näherhin in deren formgebenden Bereich (Kavität) mit Druck injiziert, worin es unter Einfluss von Wärme und Druck gehärtet wird.

Das Einbringen des Harzes in die RTM-Kavität erfolgt unter hohem Druck, so dass der aus den einzelnen Textillagen bestehende Faserverbundrohling vollständig mit dem Harz infiltriert wird. Hierbei werden die einzelnen Fasern in eine Matrix aus dem duroplastischen oder thermoplastischen Harz eingebettet, woraufhin die eigentliche Härtung erfolgen kann.

Zur Vermeidung möglicher Lufteinschlüsse in der Kavität des formgebenden Bereichs wird dieser zuvor bevorzugt evakuiert. Durch den verminderten atmosphärischen Druck innerhalb des formgebenden Bereichs kann das Harz auch bis in höhergelegene Regionen der Kavität verbracht werden, wodurch diese vollständig mit Harz ausgefüllt ist. In Kombination mit dem aufgebrachten Druck wird das Harz somit in alle Bereiche der Kavität gedrückt und/oder gesaugt.

In vorteilhafter Weise wird das Harz mittig in die Kavität der RTM-Kavität injiziert. Durch die mittige Injizierung des Harzes in die Kavität werden alle Bereiche des Faserverbundrohlings gleichmäßig mit dem Harz infiltriert.

Da der Faserverbundrohling vor seinem Kontakt mit dem Harz aus der Preform herausgetrennt wurde, weist das Faserverbundbauteil nach dem Härten des Harzes keine freiliegenden oder gar angeschnittenen Fasern auf. Die beim Heraustrennen des Faserverbundrohlings freiliegenden Enden der Fasern sind vollständig mit dem Harz überzogen, wodurch sie vor möglichen Belastungen und die Lebensdauer des Faserverbundbauteils verkürzenden Beschädigungen geschützt sind.

Es ist vorgesehen, dass der Faserverbundrohling innerhalb der RTM-Kavität lokal unterschiedlich temperiert werden kann. Weiterhin ist vorgesehen, dass der Faserverbundrohling innerhalb der RTM-Kavität lokal veränderlich temperiert werden kann. Über die lokal veränderliche Temperierung des Faserverbundrohlings können vorbestimmte Temperaturkurven innerhalb der RTM-Kavität gefahren werden, wodurch die einzelnen Bereiche spannungsfrei gehärtet werden. Grundsätzlich kann es sich bei der Temperierung um eine Erwärmung oder Abkühlung handeln.

Der Faserverbundrohling kann nach dem Härten des Harzes innerhalb der RTM-Kavität aktiv gekühlt werden. Grundsätzlich kann die Kühlung auch außerhalb der RTM-Kavität erfolgen.

Es ist vorgesehen, dass der bereits infiltrierte und gehärtete Faserverbundrohling außerhalb der RTM-Kavität zumindest bereichsweise durch eine Wärmequelle auf eine Temperatur von 80 °C bis 200 °C erhitzt werden kann. Der bereits infiltrierte und gehärtete Faserverbundrohling wird insbesondere auf eine Temperatur von 120 °C bis 130 °C erhitzt. Die nachträgliche Erhitzung hat den Zweck, das Harz vollständig auszuhärten. Die Erhitzung erfolgt bevorzugt in einem Temperofen, innerhalb dem ein oder mehrere der bereits infiltrierten und vorgehärteten Faserverbundrohlinge aufgeheizt werden. Grundsätzlich kann die Erhitzung auch über andere Wärmequellen erfolgen, welche dazu geeignet sind, den bereits infiltrierten und vorgehärten Faserverbundrohling zumindest bereichsweise im Kontakt oder berührungslos zu erwärmen. Die Temperierung kann beispielsweise auch über Infrarot-Strahlung, Mikrowellen oder Induktion in Kombination mit ferromagnetischen Materialien erfolgen.

Je nach Anforderung kann das so erhaltende Bauteil nachträglich mechanisch bearbeitet werden. So können beispielsweise einzelne Bereiche einem händischen oder automatisierten Schleifprozess zugeführt werden.

Die Erfindung sieht bereits beim Stapeln der einzelnen Textillagen vor, dass die einzelnen Fasern der Textillagen oder die Textillagen selbst aus unterschiedlichen Werkstoffen gebildet werden. So können wenigstens einige der Textillagen beispielsweise aus Glasfasern oder Kohlenstofffasern gebildet sein. Darüber hinaus kann auch zumindest eine der Textillagen aus Keramikfasern, Aramidfasern oder Borfasern sowie Naturfasern oder Nylonfasern gebildet sein. Einzelne Fasern der Textillagen können gezielt aus einem gegenüber den benachbarten Fasern unterschiedlichen Werkstoff gebildet sein, beispielsweise aus einer Glas- oder Kohlenstofffaser. Einzelne Fasern können auch als Keramikfaser, Aramidfaser oder Borfaser sowie als Naturfaser oder Nylonfaser verwendet werden. Grundsätzlich kann wenigstens eine Faser auch aus Metall oder eine der Textillagen aus metallischen Fasern gebildet sein.

Es ist vorgesehen, dass das Harz mittig in die RTM-Kavität injiziert wird. Der besondere Vorteil liegt hierbei in der gleichmäßigen Verteilung des Harzes innerhalb der Kavität, wobei eine vollständige Infiltrierung der einzelnen Textillagen erreicht wird. Aufgrund der gleichen Entfernung der jeweiligen Endbereiche innerhalb der Kavität wird eine gleichmäßige Verteilung des Harzes ohne etwaige Lufteinschlüsse ermöglicht.

In einer bevorzugten Ausgestaltung ist vorgesehen, dass zum Härten und/oder zum Kühlen unterschiedliche Temperaturniveaus gefahren werden. Entsprechende Temperaturniveaus können bereits in dem Pressformwerkzeug verwendet werden. Darüber hinaus können auch in der RTM-Kavität unterschiedliche Temperaturniveaus gefahren werden. Im Ergebnis kann somit der gesamte Herstellungsprozess sowie das jeweilige Händling während der Herstellung vereinfacht werden.

Das erfindungsgemäße Verfahren zeigt eine überaus wirtschaftliche Möglichkeit zur Herstellung einer Blattfeder als Faserverbundbauteil für ein Kraftfahrzeug auf, welche in der Handhabung der mit einem Harz infiltrierter Fasern deutlich vereinfacht ist. Sämtliche mit dem nicht abgebundenen Harz in Verbindung stehenden Prozesse finden innerhalb eines gekapselten Systems, näherhin innerhalb der RTM-Kavität, statt, wodurch die aufwendige Handhabung und Lagerung bereits infiltrierter Fasern entfällt.

Durch das Herstellen einer Preform, bei welcher die einzelnen Textillagen zunächst über ein Bindemittel aneinander fixiert werden, können die einzelnen Fasern zunächst außerhalb des Kontaktbereichs mit dem Harz exakt positioniert und geformt werden. Die Herstellung der Preform erhebt keinerlei besondere Anforderungen an die deckungsgleiche Schichtung der einzelnen Textillagen, da der eigentliche in die Matrix aus dem duroplastischen oder thermoplastischen Harz einzubettende Faserverbundrohling zunächst aus der Preform herausgetrennt wird. Durch das Heraustrennen aus der Preform werden überaus saubere und exakte Randbereiche geschaffen, welche unabhängig von der zuvor eingesetzten Sorgfalt in Bezug auf die Schichtung der einzelnen Textillagen erreicht wird.

Die Erfindung schafft eine nach dem zuvor beschriebenen Verfahren hergestellte Blattfeder als Faserverbundbauteil für ein Kraftfahrzeug, welche wenigstens zwei Textillagen aus Fasern und eine die Fasern umgebende Matrix aus einem gehärteten Harz umfasst. Das Harz kann beispielsweise duroplastisch oder thermoplastisch sein. Zwischen den beiden Textillagen ist zumindest bereichsweise ein trocken aufgebrachtes Bindemittel angeordnet. Bei dem Bindemittel kann es sich um einen sich von dem Harz unterscheidenden Werkstoff handeln. Grundsätzlich kann es sich bei dem Bindemittel auch um einen gegenüber dem Harz gleichen Werkstoff handeln, allerdings weist das Bindemittel dann eine andere Länge der Molekülketten auf. Aufgrund der unterschiedlich langen Molekülketten weist das Bindemittel gegenüber dem Harz unterschiedliche Eigenschaften in Abhängigkeit von der jeweiligen Temperatur auf. Das Bindemittel ist dafür vorgesehen, die Textillagen bereits vor ihrer Infiltrierung mit dem Harz untereinander zu fixieren. Das Harz selbst wird in einer RTM-Kavität gehärtet.

Die Enden der einzelnen Fasern können vollständig in dem Harz eingebettet sein. Die Randbereiche der einzelnen Textillagen, näherhin die Enden der Faser, weisen randseitig einen zumindest bereichsweise gleich bleibenden Abstand zur Außenkontur des Faserverbundbauteils auf. Auch wenn das Faserverbundbauteil bereichsweise mechanisch bearbeitet ist, weisen die bearbeiteten Bereiche keinerlei offene Enden der Fasern auf.

In vorteilhafter Weise sind wenigstens 90 % der in dem Faserverbundbauteil angeordneten Fasern in Längsrichtung der Blattfeder ausgerichtet. Alternativ können auch insbesondere 95 % der in der Blattfeder enthaltenen Fasern in deren Längsrichtung ausgerichtet sein. Vorzugsweise sind 99 % der in der Blattfeder angeordneten Fasern in deren Längsrichtung ausgerichtet. Die nicht in Längsrichtung des Faserverbundbauteils ausgerichteten Fasern erstrecken sich vorzugsweise in dessen Querrichtung.

Der Anteil der quer zur Längsrichtung der Blattfeder ausgerichteten Fasern kann von 0 % bis 2 % des Flächengewichts einer Textillage liegen. Bei einer nur in eine Richtung beanspruchten Blattfeder kann diese lediglich unidirektionale Textilschichten aufweisen. Die einzelnen Fasern können dabei in Form von Rovings angeordnet sein, welche nur in Richtung der Beanspruchung ausgerichtet sind. Die quer zur Hauptrichtung angeordneten Querfasern dienen zur Stabilisierung der längsgerichteten Fasern. Der Werkstoff der Längs- und Querfasern kann von einander unterschiedlich sein. Einzelne Fasern können beispielsweise aus Glasfasern oder Kohlenstofffasern gebildet sein. Weiterhin können einzelne Fasern auch als Keramikfasern, Aramidfasern oder Borfasern sowie Naturfasern oder Nylonfasern ausgebildet sein. Darüber hinaus können beispielsweise auch Garne, Metallfäden oder Thermoplastfäden als Faser Verwendung finden. Für eine reine Stabilisierung kann die Querfaser gegenüber der Längsfaser aus einem schwächeren Werkstoff gebildet sein. Insbesondere beim Auftreten erhöhter Querzugspannungen können die Querfasern auch aus einem höhere Zugkräfte aufnehmenden Werkstoff gebildet sein.

Die Blattfeder weist als Faserverbundbauteil in ihrem Querschnitt einen Faseranteil von 50 % bis 70 % auf. Grundsätzlich kann der Faseranteil innerhalb des Querschnitts des Faserverbundbauteils bei 55 % bis 65 % liegen. Vorzugsweise weist das Faserverbundbauteil in seinem Querschnitt einen Anteil an Fasern von 59 % bis 63 % auf. Durch einen erhöhten, die Zugspannungen aufnehmenden Faseranteil innerhalb des Faserverbundbauteils können erhöhte Zugkräfte aufgenommen werden. Bei auf Biegung beanspruchten Bauteilen, insbesondere bei einer Blattfeder, kann der Faseranteil im Querschnitt des Faserverbundbauteils bevorzugt in dem Randbereich der sich einstellenden Biegeform angeordnet sein, wobei die einzelnen Fasern die Zugkräfte und das Harz die auf der gegenüberliegenden Seite sich einstellenden Druckkräfte aufnimmt.

Die Erfindung sieht vor, dass mindestens eine der Fasern aus einem unterschiedlichen Werkstoff gebildet ist. Grundsätzlich können die einzelnen Fasern sowie Faserbündel (Rovings) oder aber die einzelnen Textillagen aus unterschiedlichen Werkstoffen gebildet sein. Einzelne Fasern können beispielsweise aus Glasfasern oder Kohlenstofffasern gebildet sein. Weiterhin sind auch Fasern aus beispielsweise Keramikfasern, Aramidfasern oder Borfasern sowie Naturfasern oder Nylonfasern denkbar. Darüber hinaus kann auch wenigstens eine Faser aus Metall gebildet sein.

Mit der aufgezeigten Erfindung ist es möglich, innerhalb kürzester Zeit und mit hoher Präzision ein Faserverbundbauteil herzustellen, welches keinerlei Schwachstellen in Bezug auf möglicherweise freiliegende Enden seiner Fasern aufweist. Durch den notwendigen Abstand der einzelnen Fasern von den Randbereichen des Faserverbundbauteils sind diese vor mechanischer Belastung geschützt. Eine etwaige mechanische Bearbeitung des Faserverbundbauteils geht dank des kontrollierten Randabstands ohne Freilegen der einzelnen Fasern einher.

Je nach Anforderung kann die fertige Blattfeder und die mit ihrer Herstellung in Verbindung stehenden Werkzeuge dem jeweiligen Anwendungs- sowie Einsatzzweck entsprechende Geometrien aufweisen. So kann die fertige Blattfeder beispielsweise einzelne Querschnittsvariationen aufweisen, welche sich über ihre Länge sowie Höhe und/oder Breite erstrecken. Insbesondere Bereiche mit höherer Belastung können hierbei gezielt eine größere Querschnittsfläche aufweisen, um die auftretenden Kräfte besser aufnehmen zu können.

Für den bestimmungsgemäßen Einbau der fertigen Blattfeder kann diese an ihren jeweiligen Enden entsprechende Lageraugen aufweisen. Die Lageraugen können beispielsweise einstückig an dem Faserverbundbauteil selbst ausgebildet sein. Grundsätzlich können die Lageraugen beispielsweise auch als vorgeformtes Bauteil bereitgestellt werden, um innerhalb des Fertigungsprozesses der Blattfeder in das Faserverbundbauteil eingearbeitet zu werden.

Die Erfindung wird nachfolgend anhand einiger in den Zeichnungen schematisch dargestellter Ausführungsbeispiele näher erläutert. Es zeigen:
- Figur 1: einen schematischen Verfahrensablauf zur Herstellung eines erfindungsgemäßen Faserverbundbauteils;
- Figur 2: einen Textillagenstapel in einer Seitenansicht;
- Figur 3: ein formgebendes Werkzeug in geschnittener Darstellungsweise sowie
- Figur 4: eine Variante eines erfindungsgemäßen Faserverbundbauteils in einem Querschnitt.

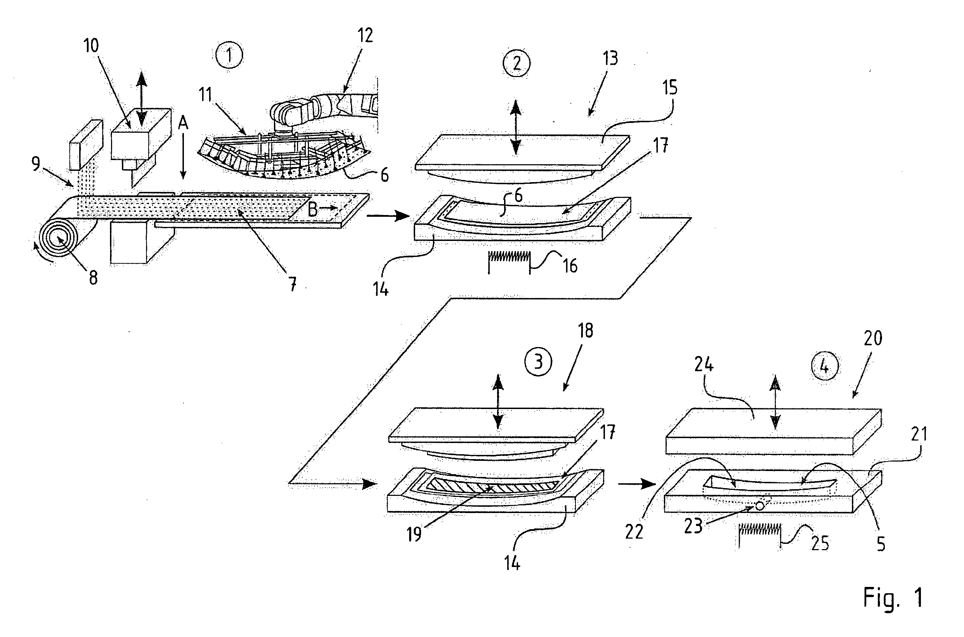

Figur 1 zeigt vier Stationen 1 - 4, welche ein Verfahren zur Herstellung einer Blattfeder 5 als Faserverbundbauteil charakterisieren. Station 1 dient der Bereitstellung einzelner Fasern in Form von einzelnen Textillagen 6. Die Textillagen 6 werden von einer Textilbahn 7 abgetrennt, welche von einer Textilrolle 8 abgewickelt wird. Während des Abwickelns der Textilbahn 7 wird diese mit einem Bindemittel 9 versehen. Das Bindemittel 9 wird trocken auf eine Oberseite A der Textilbahn 7 aufgebracht, woraufhin die so mit dem Bindemittel 9 versehene Textilbahn 7 in eine Durchlaufrichtung B unterhalb einer Trennvorrichtung 10 hindurchgeführt und zu einzelnen mit dem Bindemittel 9 versehenen Textillagen 6 abgelängt wird. Die so abgetrennten Textillagen 6 werden einzeln über einen Vakuumgreifer 11 aufgenommen, welcher mit einem Manipulator 12 in Form eines Roboterarms verbunden ist. Der Vakuumgreifer 11 ist so aufgebaut, dass die aufgenommene Textillage 6 bereits in eine an den Umformbereich eines Pressformwerkzeugs 13 in seiner Biegung angepasst wird.

Über den Manipulator 12 der nachfolgenden Station 2 wird die aufgenommene Textillage 6 in das Pressformwerkzeug 13 hineingeschwenkt, wo sie auf ein erstes Werkzeugunterteil 14 des Pressformwerkzeugs 13 abgelegt wird. Je nach zu erstellendem Bauteil werden so mehrere Textillagen 6 auf dem ersten Werkzeugunterteil 14 aufeinander geschichtet. Sobald die erforderliche Anzahl an Textillagen 6 erreicht ist, wird das Pressformwerkzeug 13 geschlossen. Hierzu werden die aufeinander gestapelten Textillagen 6 zwischen dem ersten Werkzeugunterteil 14 und einem ersten Werkzeugoberteil 15 zusammengepresst. Über eine in dem Pressformwerkzeug 13 integrierte erste Temperiervorrichtung 16 werden die Textillagen 6 und das damit verbundene Bindemittel 9 erhitzt. Die Temperatur kann beispielsweise von 80 °C bis 130 °C betragen. Hierdurch wird das Bindemittel 9 innerhalb des Pressformwerkzeugs 13 durch Erhitzen aufgeschmolzen.

Durch das aufgeschmolzene Bindemittel 9 werden die einzelnen Textillagen 6 miteinander verbunden und zu einer Preform 17 verklebt. Die Preform 17 besitzt eine bereits an die fertige Blattfeder 5 angelehnte Formgebung. Sobald das Bindemittel 9 innerhalb des Pressformwerkzeugs 13 aufgeschmolzen ist, werden die einzelnen Textillagen 6 durch Kühlen des aufgeschmolzenen Bindemittels 9 untereinander fixiert. Durch das Kühlen wird das Temperaturniveau von einer zum Aufschmelzen benötigten hohen Temperatur auf eine niedrigere Temperatur abgesenkt, beispielsweise auf 60 °C. Die für das Aufschmelzen benötigte Temperatur liegt beispielsweise bei 80 °C bis 130 °C. Das Kühlen erfolgt hierbei ebenfalls über die erste Temperiervorrichtung 16, welche in dem Pressformwerkzeug 13 integriert ist.

Die so erhaltene Preform 17 wird anschließend an Station 3 übergeben. Hierzu wird die Preform 17 innerhalb des ersten Werkzeugunterteils 14 unter einem Stanzwerkzeug 18 verbracht, welches aus der Preform 17 einen exakt konturierten Faserverbundrohling 19 heraustrennt. Das Heraustrennen des Faserverbundrohlings 19 aus der Preform 17 erfolgt durch Stanzen.

Anschließend wird der so hergestellte Faserverbundrohling 19 an Station 4 übergeben, welche eine RTM-Kavität 20 beinhaltet. Hierfür wird der Faserverbundrohling 19 aus dem ersten Werkzeugunterteil 14 herausgenommen und in ein zweites Werkzeugunterteil 21 der RTM-Kavität 20 eingelegt. Das Einlegen des Faserverbundrohlings 19 erfolgt in eine Kavität 22 des zweiten Werkzeugunterteils 21, welche über eine mittig in dem zweiten Werkzeugunterteil 21 angeordnete Einfüllöffnung 23 mit einem nicht näher dargestellten Harz befüllt werden kann.

Zur Herstellung der Blattfeder 5 wird nun die RTM-Kavität 20 geschlossen, wobei der in die Kavität 22 eingelegte Faserverbundrohling 19 zwischen dem zweiten Werkzeugunterteil 21 und einem zweiten Werkzeugoberteil 24 der RTM-Kavität 20 eingeschlossen wird. Das Harz wird anschließend in die Kavität 22 hineingedrückt, während eine zweite Temperiervorrichtung 25 die RTM-Kavität 20 erwärmt. Die RTM-Kavität 20 kann über die zweite Temperiervorrichtung 25 lokal temperiert werden, wobei die lokale Temperierung auch sukzessive über einzelne Bereiche der Kavität 22 hin erfolgt.

Bevorzugt wird ein Unterdruck erzeugt, indem die Kavität 22 evakuiert wird. Das Harz wird mit so hohem Druck in die RTM-Kavität 20 eingefüllt, bis das zweite Werkzeugoberteil 24 ein Abheben erkennen lässt. In diesem Moment ist die gesamte Kavität 22 und insbesondere alle Textillagen 6 des Faserverbundrohlings 19 mit dem Harz infiltriert. Anschließend erfolgt das Härten unter entsprechendem Pressendruck und Temperatur.

Die aus der RTM-Kavität 20 zu entnehmende Blattfeder 5 wird zu ihrer vollständigen Härtung außerhalb der RTM-Kavität 20 zumindest bereichsweise durch eine nicht näher dargestellte Wärmequelle auf eine Temperatur von 80 °C bis 200 °C, insbesondere auf eine Temperatur von 120 °C bis 130 °C erhitzt. Hierbei wird das Harz vollständig ausgehärtet. Die somit vollständig ausgehärtete Blattfeder 5 kann anschließend in ebenfalls nicht näher dargestellter Art und Weise mechanisch bearbeitet werden.

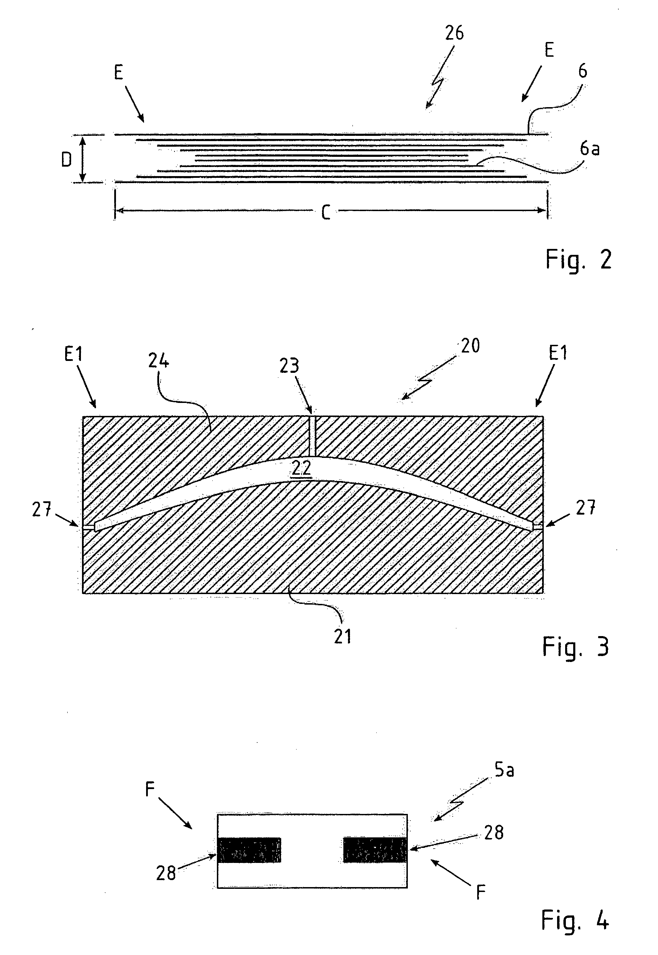

Figur 2 zeigt einen Textillagenstapel 26 in einer Seitenansicht. Hierbei sind die Textillagen 6 zusammen mit weiteren Textillagen 6a gestapelt, wobei die Textillagen 6, 6a sich in ihrer Länge unterscheiden. Je nach Ausgestaltung der herzustellenden Blattfeder 5 werden die einzelnen Textillagen 6, 6a zunächst in einer entsprechenden Länge C sowie Breite bereitgestellt. Die Länge C kann beispielsweise 2.000 mm betragen, während die Breite beispielsweise 600 mm umfasst. Die einzelnen Textillagen 6, 6a werden in einer Höhe D beispielsweise zu 30 bis 80 einzelnen Lagen aufeinander gestapelt.

Bei dem hier dargestellten Beispiel erhält die fertige Blattfeder 5 durch die zwischen den Textillagen 6 gelegenen kürzeren Textillagen 6a sich verjüngende Enden E. Durch diese Ausgestaltung können beispielsweise Halterungen an den Enden E angeordnet sein, welche die Blattfeder 5 in einem hier nicht näher dargestellten Kraftfahrzeug integrieren. Dem in Figur 2 aufgezeigten Beispiel ist zu entnehmen, dass durch Variation der jeweiligen Länge C sowie der Menge an aufeinander gestapelten Textillagen 6, 6a diverse Formgebungen in Bezug auf Verjüngungen oder Verdickungen auch in den zwischen den Enden E gelegenen Bereichen ermöglicht sind.

Figur 3 zeigt einen Schnitt durch die aus dem zweiten Werkzeugunterteil 21 und dem zweiten Werkzeugoberteil 24 gebildete RTM-Kavität 20. Die beiden Werkzeugteile 21, 24 bilden zusammen die Kavität 22. Die Kavität kann, wie dargestellt, beispielsweise eine gebogene und sich zu Enden E1 verjüngende Form aufweisen. Im Bereich der Enden E1 sind Auslassöffnungen 27 angeordnet, welche die RTM-Kavität 20 von Außen durchdringen und in die Kavität 22 münden. In der Mitte der gebogenen Kavität 22 ist die zwischen den Auslassöffnungen 27 gelegene Einfüllöffnung 23 angeordnet, über welche das Harz in die Kavität 22 hineingepresst wird.

Um das Resin Transfer Molding (RTM)-Verfahren durchzuführen, wird der hier nicht näher dargestellte Faserverbundrohling aus Figur 1 in die Kavität 22 eingelegt und durch das zweite Werkzeugunterteil 21 und das zweite Werkzeugoberteil 24 der RTM-Kavität 20 umschlossen. Bei dem Harz handelt es sich um ein Duroplast oder ein Thermoplast, welches durch die Einfüllöffnung 23 unter hohem Druck in die Kavität 22 gepresst wird. Die Einfüllöffnung 23 ist gezielt im mittleren Bereich der RTM-Kavität 20 angeordnet, damit sich das Harz ideal verteilen kann, wobei sämtliche Textillagen 6, 6a infiltriert werden.

Der bevorzugte Druck für die Injektion des Harzes in die RTM-Kavität 20 liegt bei 80 bar bis 100 bar, wobei die RTM-Kavität 20 über die hier nicht näher darstellte zweite Temperiervorrichtung 25 aus Figur 1 auf konstante 80 °C geheizt wird. Bei dieser Temperatur besitzt das Harz seine höchste Viskosität, wobei bei anderen Harzen abweichende Temperaturen und Drücke wählbar sind.

Die Injektion des Harzes erfolgt so lange, bis dieses aus den Auslassöffnungen 27 der RTM-Kavität 20 austritt. Zu diesem Zeitpunkt sind die Textillagen 6, 6a mit dem Harz innerhalb der Kavität 22 durchtränkt. Im Anschluss werden die Auslassöffnungen 27 verschlossen. Anschließend wird die Kavität 22 vollständig mit dem Harz unter hohem Druck ausgefüllt, bis sich die RTM-Kavität 20 durch den hohen Innendruck leicht öffnet. Hierdurch sind sämtliche Fasern der Textillagen 6, 6a vollständig in die noch nicht ausgehärtete Matrix des Harzes eingebettet. Weiterhin liegen keine freien Faserenden der Textillagen 6, 6a außerhalb des Harzes.

Für den nachfolgenden Formprozess wird die RTM-Kavität 20 mit vollem Pressdruck beaufschlagt, welcher eine Zeit lang beibehalten wird. Der damit zusätzlich aufgebrachte Innendruck entspricht einigen Zehnteln bis einigen Hundertsteln des Ausgangsdruckes. Je nach verwendetem Harz beträgt die Aushärtzeit beispielsweise zwischen 7 Minuten und 60 Minuten.

Um die Härtung zu beschleunigen, wird eine entsprechend höhere Temperatur gewählt.

Im Anschluss wird die Blattfeder 5 aus der RTM-Kavität 20 entnommen und beispielsweise in einen Temperofen eingelegt. Hier kann die Blattfeder 5 beispielsweise bei Temperaturen von 120 °C bis 130 °C vollständig aushärten. Nach dem vollständigen Aushärten kann dieses mechanisch bearbeitet werden.

Figur 4 stellt in einer Variante eine Blattfeder 5a in ihrem Querschnitt dar. Die Blattfeder 5a, welche in nicht näher dargestellter Art aus den Fasern der Textillagen 6, 6a sowie dem die Fasern als Matrix umgebenden duroplastischen oder thermoplastischen Harz gebildet ist, weist in ihren Randbereichen F verstärkte Bereiche 28 auf.

Die verstärkten Bereiche 28 der Blattfeder 5a sind in nicht näher dargestellter Weise durch hochfeste Fasern gebildet, beispielsweise durch Kohlenstofffasern. Hierdurch wird die laterale Steifigkeit der Blattfeder 5a verbessert. Die restlichen verwendeten Fasern können dabei beispielsweise aus Glasfasern gebildet sein.

### Bezugszeichen:

- 1 -: Station
- 2 -: Station
- 3 -: Station
- 4 -: Station
- 5 -: Blattfeder
- 5a -: Blattfeder
- 6 -: Textillage
- 6a -: Textillage
- 7 -: Textilbahn
- 7a -: Textilbahn
- 7b -: Textilbahn
- 8 -: Textilrolle
- 8a -: Textilrolle
- 8b -: Textilrolle
- 9 -: Bindemittel
- 10 -: Trennvorrichtung
- 11 -: Vakuumgreifer
- 12 -: Manipulator
- 13 -: Pressformwerkzeug
- 14 -: erstes Werkzeugunterteil
- 15 -: erstes Werkzeugoberteil
- 16 -: erste Temperiervorrichtung
- 17 -: Preform
- 18 -: Stanzwerkzeug
- 19 -: Faserverbundrohling
- 20 -: RTM-Kavität
- 21 -: zweites Werkzeugunterteil
- 22 -: Kavität
- 23 -: Einfüllöffnung
- 24 -: zweites Werkzeugoberteil
- 25 -: zweite Temperiervorrichtung
- 26 -: Textillagenstapel
- 27 -: Auslassöffnung
- 28 -: Bereich, verstärkt

- A -: Oberseite
- B -: Durchlaufrichtung
- C -: Länge
- D -: Höhe
- E -: Ende
- E1 -: Ende
- F -: Randbereich

## Patentansprüche

1. Verfahren zur Herstellung einer Blattfeder (5, 5a) als Faserverbundbauteil für ein Kraftfahrzeug, welche einzelne Fasern und eine die Fasern umgebende Matrix aus einem gehärteten Harz umfasst, wobei die Fasern in Form von wenigstens zwei Textillagen (6, 6a) bereitgestellt, aufeinander geschichtet und zu einer trockenen Preform (17) fixiert werden, welche in einer RTM-Kavität (20) mit dem Harz infiltriert und gehärtet wird, **dadurch gekennzeichnet, dass** die Textillagen (6, 6a) innerhalb eines Pressformwerkzeugs (13) geformt und durch ein auf wenigstens eine der Textillagen (6, 6a) trocken aufgebrachtes Bindemittel (9) zu der trockenen Preform (17) fixiert werden, wobei das Bindemittel (9) zunächst auf eine Textilbahn (7, 7a - b) aufgebracht wird, aus welcher die einzelnen Textillagen (6, 6a) zugeschnitten werden.

2. Verfahren nach Anspruch 1, **dadurch gekennzeichnet, dass** das Harz mittig in die RTM-Kavität (20) injiziert wird.

3. Verfahren nach Anspruch 1 oder 2, **dadurch gekennzeichnet, dass** das Bindemittel (9) innerhalb des Pressformwerkzeugs (13) durch Erhitzen aufgeschmolzen wird.

4. Verfahren nach einem der Ansprüche 1 bis 3, **dadurch gekennzeichnet, dass** die Preform (17) durch Kühlen des aufgeschmolzenen Bindemittels (9) fixiert wird.

5. Verfahren nach Anspruch 4, **dadurch gekennzeichnet, dass** aus der Preform (17) ein Faserverbundrohling (19) herausgetrennt, insbesondere ausgestanzt, wird.

6. Verfahren nach Anspruch 5, **dadurch gekennzeichnet, dass** der Faserverbundrohling (19) innerhalb der RTM-Kavität (20) mit dem Harz infiltriert und gehärtet wird.

7. Verfahren nach Anspruch 6, **dadurch gekennzeichnet, dass** der Faserverbundrohling (19) innerhalb der RTM-Kavität (20) lokal unterschiedlich und/oder lokal veränderlich temperiert wird.

8. Verfahren nach Anspruch 6 oder 7, **dadurch gekennzeichnet, dass** der Faserverbundrohling (19) nach dem Härten des Harzes innerhalb der RTM-Kavität (20) aktiv gekühlt wird.

9. Verfahren nach einem der Ansprüche 6 bis 8, **dadurch gekennzeichnet, dass** der bereits infiltrierte und gehärtete Faserverbundrohling (19) außerhalb der RTM-Kavität (20) zumindest bereichsweise durch eine Wärmequelle auf eine Temperatur von 80° bis 200°C, insbesondere auf eine Temperatur von 120° bis 130° C erhitzt wird.

10. Verfahren nach einem der Ansprüche 1 bis 9, **dadurch gekennzeichnet, dass** die einzelnen Fasern der Textillagen (6, 6a) oder die Textillagen (6, 6a) selbst aus unterschiedlichen Werkstoffen gebildet werden.

11. Verfahren nach einem der Ansprüche 1 bis 10, **dadurch gekennzeichnet, dass** zum Härten und/oder zum Kühlen unterschiedliche Temperaturniveaus gefahren werden.

## Claims

1. Method for producing a leaf spring (5, 5a) in the form of a fibre composite component for a motor vehicle, which leaf spring has individual fibres and a matrix formed of a hardened resin surrounding the fibres, the fibres being provided in the form of at least two textile layers (6, 6a) layered on top of one another and fixed so as to form a dry preform (17) which is infiltrated with the resin and hardened in an RTM cavity (20), **characterised in that** the textile layers (6, 6a) are moulded inside a compression mould tool (13) and fixed so as to form the dry preform (17) by a binder (9) applied dry onto at least one of the textile layers (6, 6a), the binder (9) first being applied onto a textile web (7, 7a-b) from which the individual textile layers (6-6a) are cut.

2. Method according to claim 1, **characterised in that** the resin is injected into the centre of the RTM cavity (20).

3. Method according to either claim 1 or claim 2, **characterised in that** the binder (9) is melted inside the compression mould tool (13) by heating.

4. Method according to any of claims 1 to 3, **characterised in that** the preform (17) is fixed by cooling the melted binder (9).

5. Method according to claim 4, **characterised in that** a fibre composite blank (19) is separated from the preform (17), in particular by stamping.

6. Method according to claim 5, **characterised in that** the fibre composite blank (19) is infiltrated with the resin and hardened inside the RTM cavity (20).

7. Method according to claim 6, **characterised in that** the fibre composite blank (19) is tempered inside the RTM cavity (20) at locally different and/or locally varying temperatures.

8. Method according to either claim 6 or claim 7, **characterised in that** the fibre composite blank (19) is actively cooled inside the RTM cavity (20) after the resin has hardened.

9. Method according to any of claims 6 to 8, **characterised in that**, after being infiltrated and hardened, the fibre composite blank (19) is heated, at least in some regions, by a heat source to a temperature of from 80 °C to 200 °C, in particular to a temperature of from 120 °C to 130 °C, outside the RTM cavity (20).

10. Method according to any of claims 1 to 9, **characterised in that** the individual fibres of the textile layers (6, 6a) or the textile layers (6, 6a) themselves are made from different materials.

11. Method according to claim any of claims 1 to 10, **characterised in that** hardening and/or cooling is performed at different temperatures.

## Revendications

1. Procédé de fabrication d'un ressort à lames (5, 5a) sous la forme d'une pièce composite fibreuse pour un véhicule automobile, qui comprend des fibres individuelles et une matrice entourant les fibres formée d'une résine durcie, dans lequel les fibres se présentent sous la forme d'au moins deux couches textiles (6, 6a) appliquées l'une sur l'autre et fixées à une ébauche séchée (17) qui est infiltrée par la résine dans une cavité RTM (20) et durcie, **caractérisé en ce que** les couches textiles (6, 6a) sont formées dans un outil de moulage (13) par pression et fixées à la préforme séchée (17) par un agent liant (9) appliqué à sec sur au moins l'une des couches textiles (6, 6a), dans lequel l'agent liant (9) est tout d'abord appliqué sur une bande textile (7, 7a-b), sur laquelle les couches textiles individuelles (6, 6a) sont découpées.

2. Procédé selon la revendication 1, **caractérisé en ce que** la résine est injectée au centre dans la cavité RTM (20).

3. Procédé selon la revendication 1 ou la revendication 2, **caractérisé en ce que** l'agent liant (9) est fondu par chauffage dans l'outil de moulage par pression (13).

4. Procédé selon l'une quelconque des revendications 1 à 3, **caractérisé en ce que** la préforme (17) est fixée par refroidissement de l'agent liant fondu (9).

5. Procédé selon la revendication 4, **caractérisé en ce qu'**une ébauche composite fibreuse (19) est séparée de la préforme (17), notamment par estampage.

6. Procédé selon la revendication 5, **caractérisé en ce que** l'ébauche composite fibreuse (19) est infiltrée par la résine dans la cavité RTM (20) et séchée.

7. Procédé selon la revendication 6, **caractérisé en ce que** l'ébauche composite fibreuse (19) est équilibrée en température par différence locale et/ou par variation locale dans la cavité RTM (20).

8. Procédé selon la revendication 6 ou la revendication 7, **caractérisé en ce que** l'ébauche composite fibreuse (19) est activement refroidie après le durcissement de la résine dans la cavité RTM (20).

9. Procédé selon l'une quelconque des revendications 6 à 8, **caractérisé en ce que** l'ébauche composite fibreuse (19) déjà infiltrée et durcie est chauffée à l'extérieur de la cavité RTM (20) au moins par zones par une source de chaleur à une température de 80 °C à 200 °C, en particulier à une température de 120 °C à 130 °C.

10. Procédé selon l'une quelconque des revendications 1 à 9, **caractérisé en ce que** les fibres individuelles des couches textiles (6, 6a) ou les couches textiles (6, 6a) elles-mêmes sont formées de matériaux différents.

11. Procédé selon l'une quelconque des revendications 1 à 10, **caractérisé en ce que** des niveaux de température différents sont mis en oeuvre pour le durcissement et/ou le refroidissement.
